(19) Europäisches Patentamt / European Patent Office / Office européen des brevets

(11) **EP 4 417 628 A1**

(12) **EUROPEAN PATENT APPLICATION**
published in accordance with Art. 153(4) EPC

(43) Date of publication:
**21.08.2024 Bulletin 2024/34**

(21) Application number: **22881120.4**

(22) Date of filing: **14.10.2022**

(51) International Patent Classification (IPC):
**C08C 19/00** [(2006.01)]     **C08J 11/12** [(2006.01)]
**C10G 1/10** [(2006.01)]     **B09B 3/40** [(2022.01)]

(52) Cooperative Patent Classification (CPC):
**B09B 3/40; C08C 19/00; C08J 11/12; C10G 1/10;**
Y02W 30/62

(86) International application number:
**PCT/JP2022/038466**

(87) International publication number:
**WO 2023/063425 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.10.2021 JP 2021169863**

(71) Applicant: BRIDGESTONE CORPORATION
Chuo-ku
**Tokyo 104-8340 (JP)**

(72) Inventors:
- **OKUNO Akira**
  **Tokyo 104-8340 (JP)**
- **NASHI Takayuki**
  **Tokyo 104-8340 (JP)**
- **KUNO Marino**
  **Tokyo 104-8340 (JP)**
- **HOJO Masahiro**
  **Tokyo 104-8340 (JP)**

(74) Representative: **Marks & Clerk LLP**
**15 Fetter Lane**
**London EC4A 1BW (GB)**

(54) **PRETREATMENT METHOD FOR RUBBER, PYROLYSIS METHOD FOR RUBBER, PRETREATED RUBBER, PYROLYSIS PRODUCT, AND PYROLYSIS OIL**

(57)     Provided is a pretreatment method for rubber, which, in the pyrolysis treatment for used rubber, can reduce the odor during pyrolysis, effectively reduce the sulfur and/or nitrogen content in the resulting pyrolysis products, which is particularly easy to volatilize, and further reduce the odor of the oil obtained from the pyrolysis. This pretreatment method for rubber is a pretreatment method for rubber, in which sulfur crosslinked rubber is pretreated prior to pyrolysis treatment, characterized in that: the method includes a holding process in which the sulfur crosslinked rubber is held for 10 minutes or longer under conditions satisfying the prescribed formulas (1) and (2) to obtain pretreated rubber; and that in the holding process, when the ambient pressure P is atmospheric pressure, the holding is performed under an air flow of inert gas.

EP 4 417 628 A1

**Description**

TECHNICAL FIELD

This disclosure relates to a pretreatment method for rubber, a pyrolysis treatment method for rubber, pretreated rubber, a pyrolysis product, and pyrolysis oil.

BACKGROUND

Recycling of used rubber, including used tires, has been promoted from the perspective of global environmental protection. One such recycling technique is to pyrolyze used rubber and recover pyrolysis products such as oil and carbon black (carbide). In recent years, various studies have been conducted to obtain high-quality pyrolysis products in such pyrolysis technologies.

In this document, used tires refer to tire products that have been used once or collected without being used or discarded.

For example, Patent Document 1 discloses controlling the flow rate of oxygen-free gas introduced into the pyrolysis furnace, in order to suppress oxidation of carbides remaining after pyrolysis of polymeric wastes such as tires. And it has been shown that the carbides obtained as a result of such control can adequately maintain rubber properties when blended with rubber components.

CITATION LIST

Patent Literature

PTL 1: WO 2010/137352 A1

SUMMARY

(Technical Problem)

By the way, rubber articles generally contain a certain amount of sulfur and nitrogen (both mainly derived from various compounding agents). Therefore, when the rubber articles are pyrolyzed, large amounts of these sulfur and/or nitrogen residues in the pyrolysis products such as oil can not only deteriorate the quality of the oil, but also cause the oil itself to have a sulfur-containing odor. Furthermore, these sulfur and/or nitrogen residues also deteriorate the odor during pyrolysis (including the odor in the working environment and the odor emitted from the pyrolysis products). This is an important technical problem to be solved in the pyrolysis process for rubber.

This is therefore the technical problem of this disclosure to provide a pretreatment method for rubber, which, in the pyrolysis treatment for used rubber, can reduce the odor during pyrolysis, effectively reduce the sulfur and/or nitrogen content in the resulting pyrolysis products, which is particularly easy to volatilize, and further reduce the odor of the oil obtained from the pyrolysis; and a pretreated rubber obtained by such pretreatment method for rubber.

In addition, the technical problem of this disclosure is to provide a pyrolysis treatment method for rubber, which, in the pyrolysis treatment for used rubber, can reduce the odor during pyrolysis, effectively reduce the sulfur and/or nitrogen content in the resulting pyrolysis product, which is particularly easy to volatilize, and further reduce the odor of the oil obtained from the pyrolysis.

Furthermore, the technical problem of this disclosure is to provide a pyrolysis product obtained by the above pyrolysis treatment method for rubber; and pyrolysis oil with reduced sulfur and/or nitrogen content and low odor as the pyrolysis product.

(Solution to Problem)

The gist structure of this disclosure, which solves the above problems, is as follows.

[1] A pretreatment method for rubber, in which sulfur crosslinked rubber is pretreated prior to pyrolysis treatment, wherein,

the method includes a holding process in which the sulfur crosslinked rubber is held for 10 minutes or longer under conditions satisfying the following formulas (1) and (2) to obtain pretreated rubber:

$$200 \leq T \leq 330 \quad \text{--- (1)}$$

$$0.0066e^{0.0362T} \leq P \leq 0.353e^{0.0362T} \quad \text{--- (2)}$$

[In the formulas, T represents the temperature of sulfur crosslinked rubber (unit: °C) and P represents the ambient pressure (unit: hPa), where P is equal to or below atmospheric pressure.], and
in the holding process, when the ambient pressure P is atmospheric pressure, the holding is performed under an air flow of inert gas.

[2] The pretreatment method for rubber according to [1], wherein holding time in the holding process is 10 minutes or longer and 60 minutes or shorter.
[3] A pyrolysis treatment method for rubber, wherein the method includes,

a pretreatment process in which the pretreatment method for rubber according to [1] or [2] is performed, and
a pyrolysis process in which the pretreated rubber obtained in the pretreatment process is pyrolyzed at 350 °C or higher to obtain a pyrolysis product.

[4] A pretreated rubber that is obtained by the pretreatment method for rubber according to [1] or [2].
[5] A pyrolysis product that is obtained by the pyrolysis treatment method of rubber according to [3].
[6] Pyrolysis oil as the pyrolysis product according to [5].
[7] The pyrolysis oil according to [6], wherein when a peak area value derived from benzothiazole in gas chromatography for the pyrolysis oil is $A_1$, and a peak area value derived from benzothiazole in gas chromatography for comparative pyrolysis oil which is obtained by pyrolysis treatment for the sulfur crosslinked rubber without pretreatment is $A_0$, the reduction rate $A_1/A_0$ is 0.60 or less.
[8] The pyrolysis oil according to [6] or [7], wherein when sulfur content rate (mass %) of the pyrolysis oil measured in accordance with JIS K 2541-4 is $B_1$, and sulfur content rate (mass %) of comparative pyrolysis oil which is obtained by pyrolysis treatment for the sulfur crosslinked rubber without pretreatment, measured in accordance with JIS K 2541-4, is $B_0$, the reduction rate $B_1/B_0$ is 0.90 or less.

(Advantageous Effect)

According to this disclosure, it is possible to provide a pretreatment method for rubber, which, in the pyrolysis treatment for used rubber, can reduce the odor during pyrolysis, effectively reduce the sulfur and/or nitrogen content in the resulting pyrolysis product, which is particularly easy to volatilize, and further reduce the odor of the oil obtained from the pyrolysis; and a pretreated rubber obtained by such pretreatment method.
In addition, according to this disclosure, it is possible to provide a pyrolysis treatment method for rubber, which, in the pyrolysis treatment for used rubber, can reduce the odor during pyrolysis, effectively reduce the sulfur and/or nitrogen content in the resulting pyrolysis product, which is particularly easy to volatilize, and further reduce the odor of the oil obtained from the pyrolysis.
Further, according to this disclosure, it is possible to provide a pyrolysis product obtained by the above pyrolysis treatment method for rubber; and pyrolysis oil with reduced sulfur and/or nitrogen content and low odor as the pyrolysis product.

DETAILED DESCRIPTION

The following is a detailed illustrative description of the pretreatment method for rubber, the pyrolysis treatment method for rubber, the pretreated rubber, the pyrolysis product, and the pyrolysis oil according to this disclosure based on the embodiments thereof.
The term "used rubber" as used herein includes vulcanized and unvulcanized rubber, and also includes rubber members separated by retreading, wear powder/debris, rubber members used in the manufacture of tires and other materials, surplus unvulcanized and vulcanized rubber from the manufacture of tires and other materials.
The compounds described herein may be partially or entirely derived from fossil resources, biological resources such as plant resources, or recycled resources such as used tires. It may also be derived from a mixture of two or more of fossil resources, biological resources, or recycled resources.

< Pretreatment method for rubber >

The pretreatment method for rubber of this disclosure is a pretreatment method for rubber, in which sulfur crosslinked rubber is pretreated prior to pyrolysis treatment, characterized in that,

the method includes a holding process in which the sulfur crosslinked rubber is held for 10 minutes or longer under conditions satisfying the following formulas (1) and (2) to obtain pretreated rubber:

$$200 \leq T \leq 330 \quad \text{---} (1)$$

$$0.0066e^{0.0362T} \leq P \leq 0.353e^{0.0362T} \quad \text{---} (2)$$

[In the formula, T represents the temperature of sulfur crosslinked rubber (unit: °C) and P represents the ambient pressure (unit: hPa), where P is equal to or below atmospheric pressure.], and
in the holding process, when the ambient pressure P is atmospheric pressure, the holding is performed under an air flow of inert gas.

As a result of the inventors' diligent study, they have found that, when used rubber is subjected to pyrolysis treatment, by conducting a holding process that satisfies the prescribed conditions as a pretreatment, the generation of unwanted odor during the subsequent pyrolysis treatment can be significantly suppressed and the sulfur and nitrogen content in the pyrolysis products such as oil can be effectively reduced. It is believed that this is because at least part of the cause of this undesirable problem is the non-rubber organic content (vulcanization accelerators, anti-aging agents, and degradation products thereof, etc.) that are normally added during the manufacture of rubber articles, and by the holding process described above, the non-rubber organic content is volatilized from the used rubber and removed from the system.

Suitably, the holding process described above reduces the amount of sulfur-containing compounds and nitrogen-containing compounds (benzothiazoles, thiophene compounds, and quinoline compounds, which can be odor components among rubber chemicals) by 30% or more, respectively, in comparison in the pyrolysis products (especially pyrolysis oil) obtained after the pyrolysis treatment. In other words, when the content rate of sulfur-containing compounds or nitrogen-containing compounds in a pyrolysis product which is obtained by pretreating (holding process) sulfur crosslinked rubber and then pyrolyzing it is $D_1$, and the content rate of sulfur-containing compounds or nitrogen-containing compounds in a comparative pyrolysis product which is obtained by without pretreating sulfur crosslinked rubber and then pyrolyzing it (under the same conditions) is $D_0$, $D_1/D_0$ can be 0.70 or less.

Note, that as the content rate of the sulfur-containing compounds, the total peak area value related to sulfur detected by the SCD detector in GC/MS (Gas Chromatography - Mass Spectrometry) can be adopted. Also, as the content rate of the nitrogen-containing compounds, the total peak area value related to nitrogen detected by the NPD detector in GC/MS (Gas Chromatography - Mass Spectrometry) can be adopted.

Suitably, the holding process described above reduces the amount of 6PPD (N-phenyl-N'-(1,3-dimethylbutyl)-p-phenylenediamine) by 50% or more, in comparison in the pyrolysis products (especially pyrolysis oil) obtained after the pyrolysis treatment. In other words, when the content rate of 6PPD in a pyrolysis product which is obtained by pretreating (holding process) sulfur crosslinked rubber and then pyrolyzing it is $E_1$, and the content rate of 6PPD in a comparative pyrolysis product which is obtained by without pretreating sulfur crosslinked rubber and then pyrolyzing it (under the same conditions) is $E_0$, $E_1/E_0$ can be 0.80 or less. More suitably, $E_1/E_0$ can be 0.75 or less, and even more suitably 0.70 or less.

As the 6PPD content, the area value of the 6PPD-derived peaks (only peaks identified as 1,4-Benzenediamine, N-(1,3-dimethylbutyl)-N'-phenyl-) detected by the NPD detector in GC/MS (Gas Chromatography - Mass Spectrometry) can be adopted.

Note, that the above holding process (pretreatment method for rubber) is completely different from the general pyrolysis treatment for rubber, since it does not cause active pyrolysis.

For example, even if the holding process described above is performed after the pyrolysis treatment, the desired effect will not be achieved because the pyrolysis treatment process itself is not affected in any way.

With respect to the holding process according to the present disclosure, as long as the conditions satisfy the formulas (1) and (2), even if the temperature and/or pressure changes, it is within the range of "holding". That is, as long as the conditions satisfy the formulas (1) and (2), the holding process of the present disclosure is satisfied even if, for example, the temperature is increased for 10 minutes or longer.

The rubber types of the sulfur crosslinked rubber used in the above pretreatment method are not limited, and all diene rubbers such as natural rubber (NR), synthetic isoprene rubber (IR), butadiene rubber (BR), styrenebutadiene rubber (SBR), ethylene-propylene-diene rubber (EPDM), and chloroprene rubber (CR) etc., can be used.

Also, as for the sulfur crosslinked rubber, rubber members that make up rubber articles such as tires, rubber hoses, tubes, conveyor belts, crawlers, weather strips, glass runs, etc., can be used, and usually, used materials are used for recycling purposes.

Furthermore, the sulfur crosslinked rubber used in the above pretreatment method may be pre-crushed to a size of about 0.5 to 80 mm.

In the holding process, the sulfur crosslinked rubber is held for 10 minutes or longer under conditions satisfying the following formulas (1) and (2):

$$200 \leq T \leq 330 \quad \text{--- (1)}$$

$$0.0066e^{0.0362T} \leq P \leq 0.353e^{0.0362T} \quad \text{--- (2)}$$

[In the formula, T represents the temperature of sulfur crosslinked rubber (unit: °C) and P represents the ambient pressure (unit: hPa), where P is equal to or below atmospheric pressure.]. If the holding time in the holding process is shorter than 10 minutes, the non-rubber organic content, including sulfur and nitrogen, cannot be sufficiently removed.

Note, that when the ambient pressure P is atmospheric pressure, the holding is performed under an air flow of inert gas. This allows the volatiles from sulfur crosslinked rubber to be efficiently removed from the system. The inert gases are not limited, but include, for example, nitrogen gas, helium gas, argon gas, etc. On the other hand, when the holding process is performed under reduced pressure, the volatiles from sulfur crosslinked rubber can be removed from the system by suction without the use of inert gas, although inert gas may be used.

The temperature T of the sulfur crosslinked rubber in the holding process is 200 °C or higher and 330 °C or lower, as indicated in Formula (1) above. If the temperature T of the sulfur crosslinked rubber in the holding process is lower than 200 °C, the non-rubber organic content in the sulfur crosslinked rubber cannot be sufficiently volatilized. On the other hand, if the temperature T of the sulfur crosslinked rubber in the holding process exceeds 330 °C, decomposition of the rubber component (polymer component) of the sulfur crosslinked rubber is accelerated. From the same perspective, the temperature T of the sulfur crosslinked rubber in the holding process is preferably 225 °C or higher (i.e., replace "200" in Formula (1) with "225". The same applies hereinafter.), more preferably 250 °C or higher, and even more preferably 260 °C or higher, and is preferably 300 °C or lower (i.e., replace "330" in Formula (1) with "300").

The method of heating sulfur crosslinked rubber to perform the holding process is not limited, and in addition to heating using a heat source, self-heating by kneading the rubber, microwave heating, etc. can be used. Further, the holding method in the holding process is not particularly limited, and includes, for example, a method of controlling the output of the heat source while monitoring the temperature of the sulfur crosslinked rubber.

In addition to that, in the holding process, the ambient pressure P (hPa) and the temperature T (°C) of the sulfur crosslinked rubber should satisfy the formula $0.0066e^{0.0362T} \leq P \leq 0.353e^{0.0362T}$, as indicated in the above formula (2). If the ambient pressure P in the holding process is lower than $0.0066e^{0.0362T}$, decomposition of the rubber component (polymer component) of the sulfur crosslinked rubber is accelerated. On the other hand, if the ambient pressure P in the holding process exceeds $0.353e^{0.0362T}$, the non-rubber organic content in the sulfur crosslinked rubber cannot be sufficiently volatilized. From the same perspective, the ambient pressure P in the holding process is preferably $0.0136e^{0.0362T}$ or higher, and more preferably $0.0195e^{0.0362T}$ or higher, and is preferably $0.246e^{0.0362T}$ or lower, and more preferably $0.171e^{0.0362T}$ or lower.

The holding time in the holding process is preferably 10 minutes or longer and 60 minutes or shorter. If the holding time is 60 minutes or shorter, excessive decomposition of the rubber component (polymer component) can be controlled. From the same perspective, it is more preferable that the holding time in the holding process is 40 minutes or shorter. On the other hand, the holding time in the holding process is preferably 20 minutes or longer from the viewpoint of more fully removing non-rubber organic content including sulfur and nitrogen. Further, in the holding process, for example, multiple temperature and time conditions may be combined, such as holding at the first temperature for 20 minutes and then holding at the second temperature for 15 minutes; or may hold for 10 minutes or longer under temperature conditions where the temperature is continuously increased or decreased within the range of the above formula (2).

The number of times the holding process is performed for sulfur crosslinked rubber may be only one time, or it may be divided into two or three times. However, from the viewpoint of efficiency of the treatment cycle and control of decomposition of rubber components, the integrated holding time is preferably 60 minutes or shorter, and more preferably 40 minutes or shorter.

In the holding in the holding process, from the viewpoint of making the pretreatment more effective and stable, it is preferable to keep the temperature fluctuation within 6 °C, within 4 °C is more preferred, and within 2 °C is even more preferred.

Then, after the holding process, pretreated rubber is obtained.

< Pretreated rubber >

The pretreated rubber of this disclosure is characterized by being obtained by the pretreatment method for rubber described above. That is, the pretreated rubber of this disclosure is pretreated sulfur crosslinked rubber. Such pretreated rubber can be subjected to pyrolysis treatment for the purpose of recycling.

The pretreated rubber is characterized by low sulfur and nitrogen components, which are particularly easy to volatilize. Specifically, the pretreated rubber has suitably lower amounts of sulfur-containing compounds and nitrogen-containing compounds (benzothiazoles, thiophene compounds, and quinoline compounds, which can be odor components among rubber chemicals, fall under this category) by 30 % or more, respectively, than the sulfur crosslinked rubber before the pretreatment (holding process). In other words, when the content rate of sulfur-containing compounds or nitrogen-containing compounds in a pretreated rubber which is obtained by pretreating (holding process) sulfur crosslinked rubber is $D_1$, and the content rate of sulfur-containing compounds or nitrogen-containing compounds in the sulfur crosslinked rubber before the pretreatment (holding process) is $D_0$, $D_1/D_0$ can be 0.7 or less.

< A pyrolysis treatment method for rubber >

The pyrolysis treatment method for rubber of this disclosure is characterized in that the method includes,

a pretreatment process in which the aforementioned pretreatment method for rubber is performed, and
a pyrolysis process in which the pretreated rubber obtained in the pretreatment process is pyrolyzed at 350 °C or higher to obtain a pyrolysis product.

According to the pyrolysis treatment method for rubber of this disclosure, prior to the pyrolysis treatment for sulfur crosslinked rubber, the rubber is pretreated as prescribed, so that the odor during pyrolysis is reduced, the sulfur and/or nitrogen content in the resulting pyrolysis product, which is particularly volatile, can be effectively reduced, and the odor of the oil obtained from the pyrolysis can be reduced.

The pretreatment process is the same as that already described for the pretreatment method for rubber. It is preferable that the pretreated rubber obtained after the pretreatment process be subjected to the pyrolysis process without cooling.

The pyrolysis treatment method for rubber of this disclosure may further include a separate process after the pretreatment process and before the pyrolysis process. Such separate processes include, for example, the process of rubber refinement and the process of mixing rubber with rubber decomposition catalysts.

The temperature in the pyrolysis process (pyrolysis temperature) is 350 °C or higher. If it is less than 350 °C, pyrolysis may not proceed sufficiently. Further, the temperature in the pyrolysis process is preferably 800 °C or lower, and more preferably 600 °C or lower, from the viewpoint of controlling quality deterioration of the pyrolysis product obtained and avoiding an increase in processing costs. In the pyrolysis process, rubber decomposition catalysts may be used as appropriate. Such rubber decomposition catalysts include, for example, zeolite catalysts and basic catalysts. In particular, it is preferable to use the rubber decomposition catalysts described above when the pyrolysis temperature is 400 °C or lower.

In order to increase the liquid yield of the pyrolysis oil obtained and the surface activity of the carbon black residue, the temperature in the pyrolysis process is preferably set to conditions that minimize gasification and carbonization of the pyrolysis oil, specifically, 400 °C or higher and 550 °C or lower.

The pyrolysis process is not limited to any specific means as long as the rubber is pyrolyzed. For example, it can be conducted in a pyrolysis furnace normally used for the pyrolysis of rubber for recycling purposes. In addition, the conditions other than temperature in the pyrolysis process are not limited as long as the rubber is pyrolyzed. For example, the conditions normally used in the pyrolysis of rubber for recycling purposes can be adopted as appropriate.

The pyrolysis process typically produces solids and gases. Carbon black (carbide) can be recovered from the solids as a pyrolysis product. Also, pyrolysis oil can be recovered from the gas as a pyrolysis product by cooling and condensation. Pyrolysis oil can also be recovered from the gas by separating it into a light oil component and a heavy oil component, depending on the desired liquefaction temperature.

< Pyrolysis products >

The pyrolysis products of this disclosure are characterized by being obtained by the pyrolysis treatment method for rubber described above. Such pyrolysis products are obtained by the pyrolysis treatment for rubber in which the rubber has been pretreated in advance as prescribed, thus the sulfur and/or nitrogen content is effectively reduced. The pyrolysis products specifically include carbon black (carbide) and pyrolysis oil.

Suitably, when a peak area value derived from benzothiazole in gas chromatography for the pyrolysis oil is $A_1$, and a peak area value derived from benzothiazole in gas chromatography for comparative pyrolysis oil which is obtained by pyrolysis treatment (under the same conditions) of the sulfur crosslinked rubber without pretreatment is $A_0$, the reduction rate $A_1/A_0$ is 0.60 or less. More suitably, the reduction rate $A_1/A_0$ is 0.55 or less, and even more suitably, it is 0.50 or less.

The reduction rate for benzothiazole (a compound containing sulfur and nitrogen) is calculated by using the area value of the benzothiazole-derived peak (only the peak identified as benzothiazole) detected by the SCD detector in GC/MS (Gas Chromatography - Mass Spectrometry).

Suitably, when the sulfur content (mass %) of the aforementioned pyrolysis oil measured in accordance with JIS K 2541-4 is $B_1$, and the sulfur content (mass %) of comparative pyrolysis oil, which is obtained by pyrolysis treatment (under the same conditions) of the sulfur crosslinked rubber without pretreatment, measured in accordance with JIS K 2541-4 is $B_0$, the reduction rate $B_1/B_0$ is 0.95 or less. More suitably, the reduction rate $B_1/B_0$ is 0.90 or less, and even more suitably, it is 0.85 or less.

Note, that total sulfur can be measured in accordance with JIS K 2541-4.

Suitably, when the nitrogen content (mass %) of the aforementioned pyrolysis oil measured in accordance with JIS K 2609 is $C_1$, and the nitrogen content (mass %) of comparative pyrolysis oil, which is obtained by pyrolysis treatment (under the same conditions) of the sulfur crosslinked rubber without pretreatment, measured in accordance with JIS K 2609 is $C_0$, the reduction rate $C_1/C_0$ is 0.90 or less. More suitably, the reduction rate $C_1/C_0$ is 0.90 or less, and even more suitably, it is 0.85 or less.

In addition, the above pyrolysis oil suitably has an odor intensity of 3 or less, according to the criteria described in the examples.

EXAMPLES

The present disclosure is described in more detail below with examples, but this disclosure is not limited in any way to the following examples.

(Preparation of sulfur crosslinked rubber)

According to the formulation provided in Table 1, each component was mixed using a 70 cc sealed mixer, and then heated for 33 minutes at a pressure of 10 MPa and a temperature of 145 °C to obtain vulcanized rubber (sulfur crosslinked rubber). The resulting vulcanized rubber was cut into 2 mm square cubes and made into vulcanized rubber pieces.

[Table 1]

|  | Mass part |
|---|---|
| Natural rubber | 100 |
| HAF carbon black | 50 |
| Stearic acid | 2.0 |
| Zinc oxide | 3.5 |
| Anti-aging agent 6PPD | 1.0 |
| Vulcanization accelerator CBS | 1.4 |
| Sulfur | 1.1 |
| Other chemicals | 1.42 |

(Pretreatment for sulfur crosslinked rubber)

The vulcanized rubber pieces were placed in a crucible and heated from room temperature to 300 °C at a rate of 20 °C/minute using an electric furnace. After reaching 300 °C, the temperature was held for 35 minutes (i.e., held under conditions satisfying the Formulas (1) and (2) for at least 10 minutes). At this time, nitrogen gas was fed into the electric furnace at a flow rate of 1000 ml/min to form a nitrogen air flow in the furnace. The vulcanized rubber pieces were pretreated in this manner prior to the pyrolysis process.

(Pyrolysis treatment)

Next, a tube pyrolysis reactor equipped with a quartz tube, an electric furnace, and an oil trap was used to pyrolyze the vulcanized rubber pieces after pretreatment (pretreated rubber). Specifically, approximately 25 g of the pretreated rubber was pyrolyzed by feeding 3 to 5 g of pretreated rubber at 5-minute intervals. In this pyrolysis process, the electric furnace was set so that the measured temperature in the quartz tube was 500 °C, and a nitrogen air flow of 100 ml/min was formed in the furnace.

As a comparison, the pyrolysis treatment was also performed under the same conditions on vulcanized rubber pieces that had not been pretreated as described above.

< Evaluation of oil odor intensity >

The odor intensity of the pyrolysis oil obtained from the pyrolysis treatment for the above vulcanized rubber pieces (without/with pretreatment) was evaluated by three healthy men and women (A, B, and C) with no abnormalities in their sense of smell, according to the following six-level criteria.

0: No odor detected at all
1: Barely detects an odor (Detection threshold concentration)
2: Can detect an odor weak enough to tell what it is (Cognitive threshold concentration)
3: Can easily detect an odor
4: Detects a strong odor
5: Detects a very strong odor

The decimal value of the average value of the three evaluations was then processed as follows to determine odor intensity (this is based on the method used to calculate odor intensity in the three-point comparison odor bag method). The evaluation results are provided in Table 2.

- If it is 0.25 or more and less than 0.75, round up to 0.5 (e.g., 2.31 and 2.68 are round up to 2.5).
- If it is 0.75 or more and less than 0.25, round up to a whole number (e.g., 2.84 and 3.15 are round up to 3).

[Table 2]

|  | A | B | C | Average | Odor intensity |
|---|---|---|---|---|---|
| Pyrolysis oil (without pre-treatment) | 5 | 5 | 4 | 4.67 | 4.5 |
| Pyrolysis oil (with pre-treatment) | 2 | 3 | 2 | 2.33 | 2.5 |

Table 2 indicates that the odor of pyrolysis oil obtained from the pyrolysis treatment for rubber can be greatly improved by applying the prescribed pretreatment to the rubber in advance.

< Evaluation of oil components (1) >

SCD and NPD detectors were installed on the gas chromatograph to analyze the composition of sulfur-containing compounds, nitrogen-containing compounds, benzothiazole, and 6PPD in the pyrolysis oil obtained from the pyrolysis treatment for the vulcanized rubber pieces (without/with pretreatment) described above by GC/MS (Gas Chromatography - Mass Spectrometry), respectively. For the sulfur-containing compounds, the total peak area values for sulfur detected by the SCD detector were measured. For the nitrogen-containing compounds, the total peak area values for nitrogen detected by the NPD detector were measured. For benzothiazole (which is a compound containing sulfur and nitrogen), the benzothiazole-derived peak area values detected by the SCD detector were measured. For 6PPD (which is a compound containing nitrogen), the 6PPD-derived peak area values detected by the NPD detector were measured. For each of the sulfur-containing compounds, nitrogen-containing compounds, benzothiazole, and 6PPD, the values of the pyrolysis oil without pretreatment were set to 100 and the values of the pyrolysis oil with pretreatment were indexed respectively. The results are provided in Table 3.

[Table 3]

|  |  | Sulfur-containing Compounds | Nitrogen-containing Compounds | Benzothiazole | 6PPD |
|---|---|---|---|---|---|
| Pyrolysis oil (without pretreatment) | Index | 100 | 100 | 100 | 100 |
| Pyrolysis oil (with pretreatment) | Index | 67 | 65 | 41 | 63 |
| Reduction rate | - | 0.67 | 0.65 | 0.41 | 0.63 |

Table 3 indicates that the amounts of sulfur-containing compounds, nitrogen-containing compounds, benzothiazole, and 6PPD in the pyrolysis oil obtained by pyrolysis treatment for rubber can be reduced, respectively, by applying the prescribed pretreatment to the rubber beforehand.

< Evaluation of oil components (2) >

The sulfur content rate (mass %) in the pyrolysis oil obtained by the pyrolysis treatment for the vulcanized rubber pieces (without/with pretreatment) described above was measured in accordance with JIS K 2541-4, and the nitrogen content rate (mass %) in the pyrolysis oil was also measured in accordance with JIS K 2609. For each of the sulfur content rate and the nitrogen content rate, the value of the pyrolysis oil without pretreatment was set to 100 and the value of the pyrolysis oil with pretreatment was indexed, respectively. The results are provided in Table 4.

[Table 4]

|  |  | Sulfur content rate | Nitrogen content rate |
|---|---|---|---|
| Pyrolysis oil (without pretreatment) | Index | 100 | 100 |
| Pyrolysis oil (with pretreatment) | Index | 81 | 85 |
| Reduction rate | - | 0.81 | 0.85 |

Table 4 indicates that the sulfur content rate and the nitrogen content rate in the pyrolysis oil obtained by pyrolysis treatment for rubber can be reduced, respectively, by applying the prescribed pretreatment to the rubber beforehand.

INDUSTRIAL APPLICABILITY

According to this disclosure, it is possible to provide a pretreatment method for rubber, which, in the pyrolysis treatment for used rubber, can reduce the odor during pyrolysis, effectively reduce the sulfur and/or nitrogen content in the resulting pyrolysis products, which is particularly easy to volatilize, and further reduce the odor of the oil obtained from the pyrolysis; and a pretreated rubber obtained by such pretreatment method.

Also, according to this disclosure, it is possible to provide a pyrolysis treatment method for rubber, which, in the pyrolysis treatment for used rubber, can reduce the odor during pyrolysis, effectively reduce the sulfur and/or nitrogen content in the resulting pyrolysis product, which is particularly easy to volatilize, and further reduce the odor of the oil obtained from the pyrolysis.

In addition, according to this disclosure, it is possible to provide a pyrolysis product obtained by the above pyrolysis treatment method for rubber; and pyrolysis oil with reduced sulfur and/or nitrogen content and low odor as the pyrolysis product.

**Claims**

1.  A pretreatment method for rubber, in which sulfur crosslinked rubber is pretreated prior to pyrolysis treatment, wherein,

    the method includes a holding process in which the sulfur crosslinked rubber is held for 10 minutes or longer under conditions satisfying the following formulas (1) and (2) to obtain pretreated rubber:

$$200 \leq T \leq 330 \quad \text{--- (1)}$$

$$0.0066e^{0.0362T} \leq P \leq 0.353e^{0.0362T} \quad \text{--- (2)}$$

[In the formulas, T represents the temperature of sulfur crosslinked rubber (unit: °C) and P represents the ambient pressure (unit: hPa), where P is equal to or below atmospheric pressure.], and
in the holding process, when the ambient pressure P is atmospheric pressure, the holding is performed under an air flow of inert gas.

2. The pretreatment method for rubber according to claim 1, wherein holding time in the holding process is 10 minutes or longer and 60 minutes or shorter.

3. A pyrolysis treatment method for rubber, wherein the method includes,

   a pretreatment process in which the pretreatment method for rubber according to claim 1 or 2 is performed, and
   a pyrolysis process in which the pretreated rubber obtained in the pretreatment process is pyrolyzed at 350 °C or higher to obtain a pyrolysis product.

4. A pretreated rubber that is obtained by the pretreatment method for rubber according to claim 1 or 2.

5. A pyrolysis product that is obtained by the pyrolysis treatment method of rubber according to claim 3.

6. Pyrolysis oil as the pyrolysis product according to claim 5.

7. The pyrolysis oil according to claim 6, wherein when a peak area value derived from benzothiazole in gas chromatography for the pyrolysis oil is $A_1$, and a peak area value derived from benzothiazole in gas chromatography for comparative pyrolysis oil which is obtained by pyrolysis treatment for the sulfur crosslinked rubber without pretreatment is $A_0$, the reduction rate $A_1/A_0$ is 0.60 or less.

8. The pyrolysis oil according to claim 6, wherein when sulfur content rate (mass %) of the pyrolysis oil measured in accordance with JIS K 2541-4 is $B_1$, and sulfur content rate (mass %) of comparative pyrolysis oil which is obtained by pyrolysis treatment for the sulfur crosslinked rubber without pretreatment, measured in accordance with JIS K 2541-4, is $B_0$, the reduction rate $B_1/B_0$ is 0.90 or less.

<div align="center">

**INTERNATIONAL SEARCH REPORT**

</div>

| | International application No. |
|---|---|
| | **PCT/JP2022/038466** |

**A. CLASSIFICATION OF SUBJECT MATTER**

*C08C 19/00*(2006.01)i; *C08J 11/12*(2006.01)i; *C10G 1/10*(2006.01)i; *B09B 3/40*(2022.01)i
FI: B09B3/40; C08C19/00; C08J11/12 ZAB; C10G1/10

According to International Patent Classification (IPC) or to both national classification and IPC

**B. FIELDS SEARCHED**

Minimum documentation searched (classification system followed by classification symbols)

C08C19/00; C08J11/12; C10G1/10; B09B3/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2019/0048166 A1 (ENVIRONMENTAL WASTE INTERNATIONAL, INC.) 14 February 2019 (2019-02-14) <br> claims, paragraphs [0024], [0036], [0037] | 1-8 |
| X | KR 10-1440948 B1 (JI GWAN, Gim) 17 September 2014 (2014-09-17) <br> claims, paragraphs [0028], [0035] | 1-2, 4 |
| Y | same as above | 3, 5-8 |
| Y | JP 2015-512965 A (VADXX ENERGY LLC) 30 April 2015 (2015-04-30) <br> claims, fig. 1 | 3, 5-8 |
| A | JP 11-140222 A (TOYODA GOSEI CO., LTD.) 25 May 1999 (1999-05-25) <br> claims | 1-8 |
| A | WO 00/74914 A1 (TOYOTA CENTRAL R&D LABS., INC.) 14 December 2000 (2000-12-14) <br> claims | 1-8 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **24 November 2022** | **06 December 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/038466**

| Patent document cited in search report | | | Publication date (day/month/year) | Patent family member(s) | | | Publication date (day/month/year) |
|---|---|---|---|---|---|---|---|
| US | 2019/0048166 | A1 | 14 February 2019 | WO | 2019/033202 | A1 | |
| KR | 10-1440948 | B1 | 17 September 2014 | (Family: none) | | | |
| JP | 2015-512965 | A | 30 April 2015 | US | 2016/0017232 | A1 | |
| | | | | claims, fig. 1 | | | |
| | | | | WO | 2013/119941 | A1 | |
| | | | | EP | 2812415 | A1 | |
| | | | | EP | 2998383 | A1 | |
| | | | | AU | 2013216895 | A | |
| | | | | CA | 2864089 | A | |
| | | | | CN | 104105781 | A | |
| | | | | IL | 233962 | D | |
| | | | | KR | 10-2014-0138151 | A | |
| | | | | MX | 2014009604 | A | |
| | | | | CN | 105018127 | A | |
| | | | | RU | 2014134429 | A | |
| | | | | AU | 2017251761 | A | |
| | | | | CL | 2014002104 | A | |
| | | | | SG | 11201404709R | A | |
| JP | 11-140222 | A | 25 May 1999 | (Family: none) | | | |
| WO | 00/74914 | A1 | 14 December 2000 | EP | 1201390 | A1 | |
| | | | | claims | | | |
| | | | | CA | 2375137 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010137352 A1